# EUROPÄISCHE PATENTANMELDUNG

(11) **EP 2 522 916 A2**
(43) Veröffentlichungstag der Anmeldung: **14.11.2012**
(21) Anmeldenummer: 12165098.0
(22) Anmeldetag: 23.04.2012
(51) Int. Cl.: F24D 3/14, F28F 1/02, F16L 9/00

(54) **Klimamodul**

(30) Priorität: 09.05.2011 AT 2632011 U
(71) Anmelder: Harreither, Raimund, 3334 Gaflenz (AT)
(72) Erfinder: Harreither, Raimund, 3334 Gaflenz (AT)
(74) Vertreter: Margotti, Herwig Franz

(57) **Zusammenfassung**

Die Erfindung betrifft ein Klimamodul (1), umfassend ein flaches Klimatisierungselement (2), welches an seinen Schmalseiten (3) oder an Eckabschnitten (17) seiner Schmalseiten (2) mit zumindest zwei Temperierungsmittelanschlüssen (9) versehen sowie in seinem Innenraum (6) von einem Temperierungsmittel durchströmbar ist, wobei die Temperierungsmittelanschlüsse (9) einen Anschlussquerschnitt (10) mit einer Hauptachse (11) sowie einer im Vergleich zur Hauptachse (11) kürzeren Nebenachse (12) aufweisen, wobei die Hauptachse (11) im Wesentlichen in Längsrichtung der Seitenkante (4) angeordnet ist und die Nebenachse (12) im Wesentlichen normal auf die Seitenkante (4) steht.

## Beschreibung

Die Erfindung betrifft ein Klimamodul zum Einbau in einem Fußboden, umfassend ein flaches Klimatisierungselement, welches an seinen Schmalseiten oder an Eckabschnitten seiner Schmalseiten mit zumindest zwei Temperierungsmittelanschlüssen versehen sowie in seinem Innenraum von einem Temperierungsmittel vollflächig durchströmbar ist, wobei zur Aufnahme hoher Lasten der Innenraum des Klimatisierungselements mit einer Noppenstruktur versehen ist.

Aus dem Stand der Technik sind seit längerem großflächige Klimamodule, die zur Heizung und/oder Kühlung von Wänden, Decken oder Fußböden eines Gebäudes zum Einsatz kommen, bekannt. Derartige Klimamodule werden üblicherweise als flache rechteckige oder quadratische Klimatisierungselemente vorzugsweise aus Kunststoff gefertigt. Die einzelnen flachen Klimatisierungselemente, die jeweils einen durchströmbaren Innenraum bilden, sind mit entsprechenden rohrförmigen Zuleitungs- und Ableitungsanschlüssen versehen, welche üblicherweise stirnseitig oder an Eckabschnitten der Klimatisierungselemente angeordnet sind. Die Klimatisierungselemente werden dazu mittels Verbindungsleitungen untereinander bzw. mit den entsprechenden Anschlussleitungen flüssigkeitsdicht zu einem Temperierungsmittelkreislauf verbunden. Als Temperierungsmittel können je nach Bedarf unterschiedliche Wärmeträgermedien zur Raumheizung oder Kühlmittel bzw. Kältemittel zur Kühlung eines Raumes verwendet werden. Meist wird bei derartigen Klimamodulen jedoch Wasser als Temperierungsmittel verwendet, wobei abhängig von der Jahreszeit und der Temperierungsaufgabe Wasser sowohl als Heizmedium, als auch als Kühlmedium eingesetzt werden kann.

Um insbesondere bei großen Räumen, beispielsweise in Großraumbüros, die mit derartigen Klimamodulen ausgestattet sind, eine ausreichende Klimatisierung zu gewährleisten, müssen jeweils große Mengen an Heiz- bzw. Kühlmedium den einzelnen Klimamodulen zugeführt werden. Die Temperierungsmittelanschlüsse an den Klimatisierungselementen sowie die Verbindungsleitungen müssen daher eine entsprechend große freie Querschnittsfläche aufweisen. Somit werden vorteilhaft eine ausreichend hohe Zirkulation des Heiz- oder Kühlmediums im Temperierungsmittelkreislauf der Klimamodule und ein entsprechend hoher Wärmeübergangskoeffizient gewährleistet.

Nachteilig an den aus dem Stand der Technik bekannten Klimamodulen ist zumindest, dass aufgrund der erforderlichen freien Querschnittsflächen der Temperierungsmittelleitungen die Durchmesser der rohrförmigen Zuleitungs- bzw. Ableitungsanschlüsse meist eine deutlich größere Bauhöhe aufweisen als die flachen Klimatisierungselemente selbst. Die Dimensionierung der erforderlichen Querschnittsflächen der Temperierungsmittelanschlüsse bestimmt demnach nachteilig die gesamte Bauhöhe des Klimamoduls.

Insbesondere bei beengten Einbausituationen mit unzureichendem Platzbedarf, wie dies beim Einbau in einem Fußboden meist der Fall ist, können derartige Klimamodule aufgrund ihrer großen Gesamthöhe entweder gar nicht oder nur mit erhöhtem Montageaufwand eingebaut werden. Die Einsatzmöglichkeiten solcher Klimamodule insbesondere zum Einbau in Fußböden sind daher beschränkt.

Es ist somit die Aufgabe der vorliegenden Erfindung ein besonders kompaktes Klimamodul mit geringer Bauhöhe bereitzustellen, das die geschilderten Nachteile des Standes der Technik vermeidet.

Diese Aufgabe wird bei einem Klimamodul gemäß dem Oberbegriff des Anspruchs 1 mit den Merkmalen des kennzeichnenden Teiles des Anspruchs 1 gelöst. Die Unteransprüche betreffen weitere vorteilhafte Ausgestaltungen der Erfindung.

Bei einem erfindungsgemäßen Klimamodul zum Einbau in Fußböden, umfassend ein flaches Klimatisierungselement, welches an seinen Schmalseiten oder an Eckabschnitten seiner Schmalseiten mit zumindest zwei Temperierungsmittelanschlüssen versehen sowie in seinem Innenraum von einem Temperierungsmittel vollflächig durchströmbar ist, wobei zur Aufnahme hoher Lasten der Innenraum des Klimatisierungselements mit einer Noppenstruktur versehen ist, weisen die Temperierungsmittelanschlüsse einen Anschlussquerschnitt mit einer längeren Hauptachse sowie einer im Vergleich zur Hauptachse kürzeren Nebenachse auf, dessen Hauptachse im Wesentlichen in Längsrichtung der Seitenkante angeordnet ist und die Nebenachse im Wesentlichen normal auf die Seitenkante steht.

Vorteilhaft weisen bei einem erfindungsgemäßen Klimamodul die Temperierungsmittelanschlüsse einen größeren Anschlussquerschnitt auf, als dies bei herkömmlichen, kreisförmigen Anschlussquerschnitten der Fall ist. Somit wird ein sehr flaches Klimamodul mit einem flächigen Klimatisierungselement geschaffen, wobei besonders zweckmäßig der Innenraum des Klimatisierungselements vom Temperierungsmittel vollflächig sowie dank der vergrößerten Anschlussquerschnitte mit hohem Durchsatz durchströmt wird.

Insbesondere beim Kühlen eines Fußbodens sind hohe Durchflussleistungen des Temperierungsmittels in den Klimamodulen erforderlich, da aufgrund der Gefahr einer unerwünschten Kondensatbildung der Temperaturgradient zwischen Vorlauf und Rücklauf des Temperierungsmittels gering sein muss. Mit den vergrößerten Anschlussquerschnitten lassen sich bei einem erfindungsgemäßen Klimamodul vorteilhaft vollflächig hohe Durchsätze bzw. hohe Durchflussleistungen des Temperierungsmittels erzielen. Somit kann auch bei einer Verwendung des Klimamoduls zum Kühlen eines Raums eine Kondensatbildung zuverlässig vermieden werden.

In einer weiteren vorteilhaften Ausführung eines erfindungsgemäßen Klimamoduls weisen die Temperierungsmittelanschlüsse einen elliptischen, ovalen oder polygonalen Anschlussquerschnitt auf.

Temperierungsmittelanschlüsse mit einem elliptischen, ovalen oder polygonalen Anschlussquerschnitt, wobei die Hauptachsenrichtung im Wesentlichen parallel zur Ebene der Seitenkanten des Klimatisierungselements ist, bieten den Vorteil, dass die gesamte Bauhöhe des Klimamoduls im Vergleich zu Temperierungsmittelanschlüssen mit kreisförmigem Rohrquerschnitt deutlich geringer ist. Die Hauptachse und die Nebenachse stehen jeweils im Wesentlichen senkrecht aufeinander. Als polygonale Anschlussquerschnitte kommen sämtliche Querschnittsflächen in Frage, die jeweils eine längere Hauptachse und eine dazu senkrechte, kürzere Nebenachse aufweisen. Beispielsweise erfüllen rechteckige oder rautenförmige Querschnitte diese Bedingungen.

Somit können erfindungsgemäße äußerst flache Klimamodule selbst unter sehr beengten Einbaubedingungen montiert werden, was einen wesentlichen Vorteil der Erfindung darstellt. Klimamodule, die mehrere Temperierungsmittelzuleitungsanschlüsse und Temperierungsmittelableitungsanschlüsse mit jeweils elliptischen Anschlussquerschnitten aufweisen, sind ebenfalls von der Erfindung umfasst.

Zweckmäßig beträgt bei einem Klimamodul gemäß der Erfindung eine Nebenachsenlänge des Anschlussquerschnitts höchstens eine doppelte Bauhöhe des Klimatisierungselements.

Die Nebenachsenlänge des Anschlussquerschnitts steht im Wesentlichen senkrecht zur Ebene der Seitenkanten des Klimatisierungselements.

In einer weiteren vorteilhaften Ausführungsform beträgt bei einem erfindungsgemäßen Klimamodul eine Nebenachsenlänge des Anschlussquerschnitts höchstens die einfache Bauhöhe des Klimatisierungselements.

Besonders zweckmäßig ist bei einem Klimamodul gemäß der Erfindung jeder Temperierungsmittelanschluss mit einem Zwischenrohrabschnitt mit elliptischem Querschnitt versehen.

In dieser vorteilhaften Ausführung ist jeder Temperierungsmittelanschluss mit einem Zwischenrohrabschnitt ausgestattet, wobei der Temperierungsmittelanschluss und der daran befestigte Zwischenrohrabschnitt denselben elliptischen Querschnitt aufweisen. Ein Zwischenrohrabschnitt bietet den Vorteil, dass der Temperierungsmittelanschluss in der Seitenkantenebene des Klimatisierungselements etwas beabstandet von den Seitenkanten zu liegen kommt und daher leicht zugänglich ist.

In einer vorteilhaften Ausführung der Erfindung ist bei einem Klimamodul jeder Temperierungsmittelanschluss mit einer Verbindungsleitung, einem benachbarten Temperierungsmittelanschluss oder einem Zwischenrohrabschnitt durch Aufstecken, Verschrauben, Verkleben oder Verschweißen verbindbar.

Je nach Ausführung kann bei Einsatz eines Schweißverfahrens beispielsweise durch entsprechende Verwendung von Innenschweißmuffen eine weitere Reduktion der Gesamtbauhöhe des Klimamoduls auf das Außenmaß der Verbindungsleitung erzielt werden.

Auch andere Verfahren zur Herstellung von lösbaren oder nicht lösbaren Verbindungen des Temperierungsmittelanschlusses mit einer Verbindungsleitung können im Rahmen der Erfindung eingesetzt werden.

Vorteilhaft ist bzw. sind bei einem erfindungsgemäßen Klimamodul das Klimatisierungselement und/oder die Temperierungsmittelanschlüsse aus einem Kunststoff gefertigt.

Zweckmäßig ist bei einem Klimamodul gemäß der Erfindung an einer Außenseite des Klimatisierungselements eine flächige Beplankung befestigbar.

Eine solche Beplankung, beispielsweise eine Gips-Kartonplatte, die in Einbaulage die Sichtseite des Klimamoduls bildet, kann je nach Anforderung mit einer glatten Oberfläche oder mit Akustikausnehmungen versehen sein.

In einer Weiterbildung der Erfindung ist bei einem erfindungsgemäßen Klimamodul an einer Außenseite des Klimatisierungselements ein Dämmmaterial, beispielsweise ein Wärmedämmmaterial, befestigbar.

Weitere Einzelheiten, Merkmale und Vorteile der Erfindung ergeben sich aus der nachfolgenden Erläuterung der in den Zeichnungen jeweils schematisch dargestellten Ausführungsbeispiele. In den Zeichnungen zeigen:
- Fig. 1 ein erfindungsgemäßes Klimamodul für den Bodeneinbau in einer teilweisen Schnittansicht von der Seite;
- Fig. 2 eine Detailansicht eines an einem Eckabschnitt eines erfindungsgemäßen Klimamoduls angeordneten Temperierungsmittelanschlusses in einer Draufsicht;
- Fig. 2A eine Detailansicht des in Fig. 2 dargestellten Temperierungsmittelanschlusses in einer Ansicht der Schnittebene I-I;
- Fig. 3 eine Detailansicht einer weiteren Ausführung eines an einem Eckabschnitt eines erfindungsgemäßen Klimamoduls angeordneten Temperierungsmittelanschlusses in einer Draufsicht;
- Fig. 3A eine Detailansicht des in Fig. 3 dargestellten Temperierungsmittelanschlusses in einer Ansicht der Schnittebene II-II;
- Fig. 4 in einer Detailansicht zwei miteinander verbundene Temperierungsmittelanschlüsse zweier benachbarter Klimamodule in einer Draufsicht;
- Fig. 5 in einer Draufsicht zwei benachbarte Klimamodule für den Einbau in einem Fußboden, wobei eine Verbindungsleitung jeweils einen Temperierungsmittelanschluss jedes Klimamoduls miteinander verbindet.

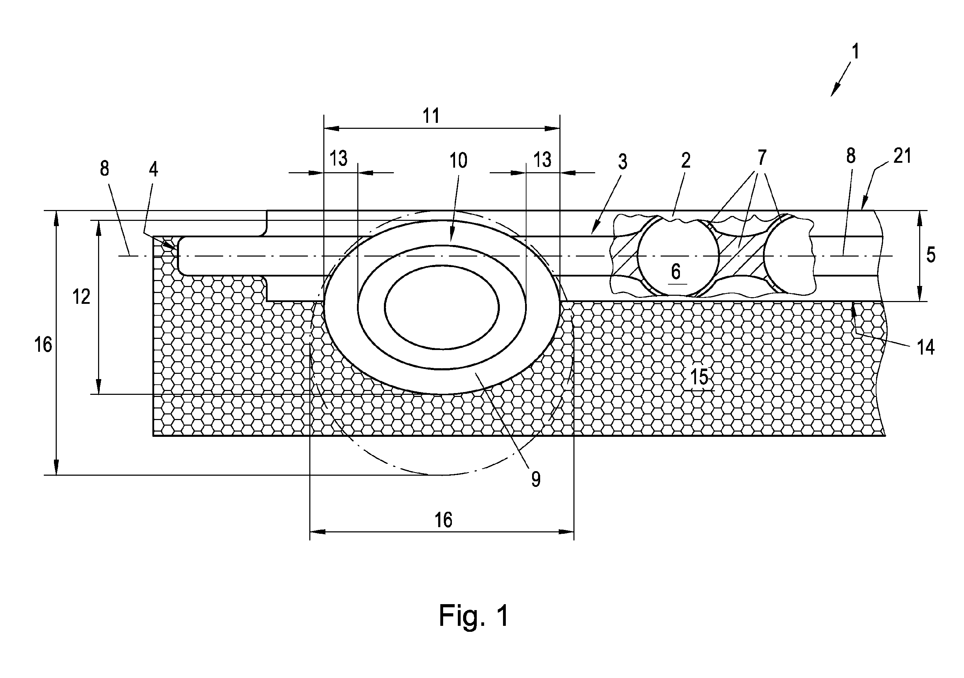

In Fig. 1 ist ein erfindungsgemäßes Klimamodul 1 für den Einbau in einem Fußboden in einer teilweisen Schnittansicht von der Seite dargestellt. Das Klimamodul 1 umfasst ein flächiges Klimatisierungselement 2, das hier an seiner Schmalseite 3 zu sehen ist. Eine Seitenkante 4 des Klimatisierungselements 2 ist mit einem Spund versehen, wodurch mehrere Klimatisierungselemente 2 von benachbarten Klimamoduln 1 miteinander verbindbar sind. Das Klimatisierungselement 2 weist vorteilhaft eine besonders geringe Bauhöhe 5 auf. Links in Fig. 1 ist das Klimatisierungselement 2 teilweise frei geschnitten dargestellt und der von einem Temperierungsmittel durchströmbare Innenraum 6 ist zu sehen. Zur Versteifung des flächigen Klimatisierungselements 2 ist der Innenraum 6 mit einer Noppenstruktur 7 versehen. Somit ist das Klimatisierungselement 2 auch zur Aufnahme hoher Lasten, die beim Einsatz als Unterkonstruktion eines Fußbodens auftreten, geeignet. An der Schmalseite 3 ist ein Temperierungsmittelanschluss 9, der einen elliptischen Anschlussquerschnitt 10 aufweist, vorgesehen. Eine Hauptachse 11 des Anschlussquerschnitts 10 ist im Wesentlichen in Längsrichtung der Seitenkante 4 angeordnet. Die Länge einer Nebenachse 12 des Anschlussquerschnitts 10, die senkrecht auf die Hauptachse 11 steht, beträgt hier weniger als die doppelte Bauhöhe 5 des Klimatisierungselements 2. Der Temperierungsmittelanschluss 9 mit dem ovalen bzw. elliptischen Anschlussquerschnitt 10 weist eine Wandstärke 13 auf. Weiters ist am Klimatisierungselement 2 an einer Außenseite 14, die hier in Einbaulage die Unterseite des Klimamoduls 1 bildet, ein Dämmmaterial 15 zur Wärmedämmung bzw. Trittschalldämmung befestigt. An einer weiteren Außenseite 21 des Klimatisierungselements 2, die hier in Einbaulage die Oberseite des Klimamoduls 1 bildet und der ersten Außenseite 14 gegenüberliegt, kann eine flächige Beplankung befestigt werden. Eine solche Beplankung, beispielsweise eine Gipskartonplatte oder eine Dämmungsplatte für einen Fußbodenaufbau, sind zur besseren Übersichtlichkeit in Fig. 1 nicht dargestellt.

In Fig. 1 ist zur Veranschaulichung des bekannten Stands der Technik auch ein Umriss eines herkömmlichen kreisförmigen Anschlussrohres mit einem Durchmesser 16 skizziert. Die gegenüber dem Durchmesser 16 eines kreisförmigen Anschlussrohres vorteilhaft reduzierte Gesamtbauhöhe des erfindungsgemäßen Klimamoduls 1 ist hier deutlich zu erkennen.

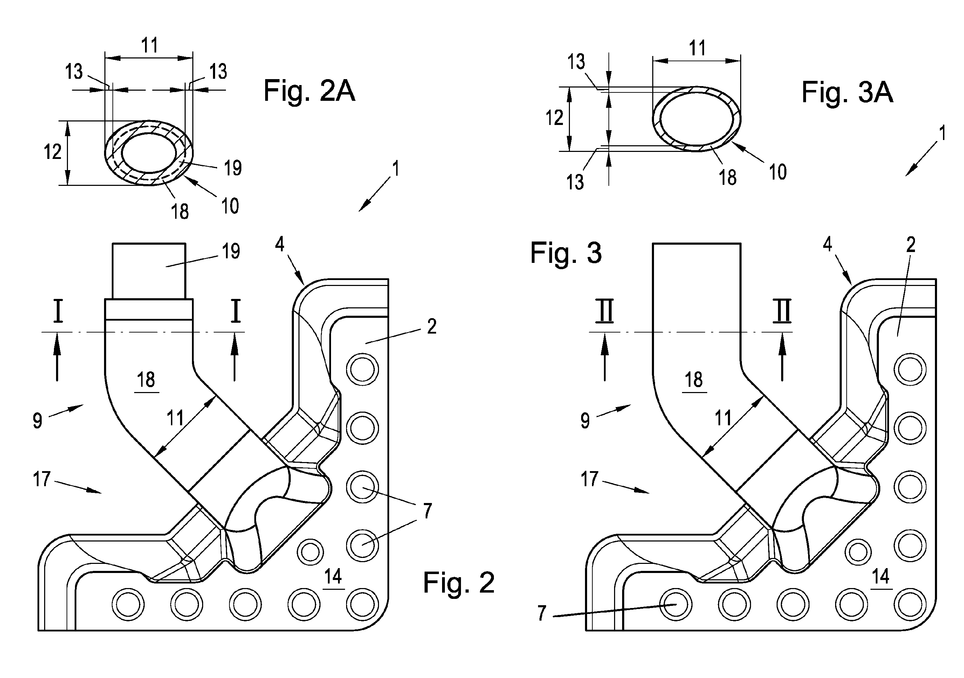

Fig. 2 zeigt in einer Detailansicht einen an einem Eckabschnitt 17 eines erfindungsgemäßen Klimamoduls 1 angeordneten Temperierungsmittelanschluss 9 in einer Draufsicht. Der Eckabschnitt 17 wird durch eine an einer Ecke des Klimatisierungselements 2 zurückspringende Seitenkante 4 gebildet. Zur besonders komfortablen Verbindung des Temperierungsmittelanschlusses 9 mit einer nicht dargestellten Verbindungsleitung ist hier ein gekrümmter Zwischenrohrabschnitt 18 vorgesehen. Der Zwischenrohrabschnitt 18 ist ebenfalls mit einem elliptischen Anschlussquerschnitt passend zum elliptischen Anschlussquerschnitt 10 des Temperierungsmittelanschlusses 9 ausgestattet. Am freien Ende des Temperierungsmittelanschlusses 9 ist eine Verbindungsmuffe 19 zum Verbinden mit einer Verbindungsleitung vorgesehen. An der Außenseite 14 des Klimatisierungselements 2 ist weiters die kreisförmige Noppenstruktur 7 zu erkennen.

Fig. 2A zeigt in einer Detailansicht den in Fig. 2 dargestellten Temperierungsmittelanschluss 9 in einer Ansicht der in Fig. 2 gekennzeichneten Schnittebene I-I. Die innerhalb des Zwischenrohrabschnitts 18 befestigte Verbindungsmuffe 19 ist deutlich zu erkennen. Bei Einsatz eines Schweißverfahrens wird durch die Verwendung einer Innenschweißmuffe als Verbindungsmuffe 19 somit eine weitere Reduktion der Gesamtbauhöhe des Klimamoduls 1 auf das Außenmaß der Verbindungsleitung erzielt.

Fig. 3 zeigt eine Detailansicht einer weiteren Ausführung eines an einem Eckabschnitt 17 eines erfindungsgemäßen Klimamoduls 1 angeordneten Temperierungsmittelanschlusses 9 in einer Draufsicht. Der gekrümmte Zwischenrohrabschnitt 18 ist an seinem vorderen freien Ende mit einer nicht dargestellten Verbindungsleitung beispielsweise durch Verkleben oder Verschweißen verbindbar.

Fig. 3A zeigt in einer Detailansicht den in Fig. 3 dargestellten Temperierungsmittelanschluss 9 in einer Ansicht der in Fig.3 eingezeichneten Schnittebene II-II. Die Wandstärke 13 des ovalen Anschlussquerschnitts 10 des Temperierungsmittelanschluss 9 ist zu erkennen.

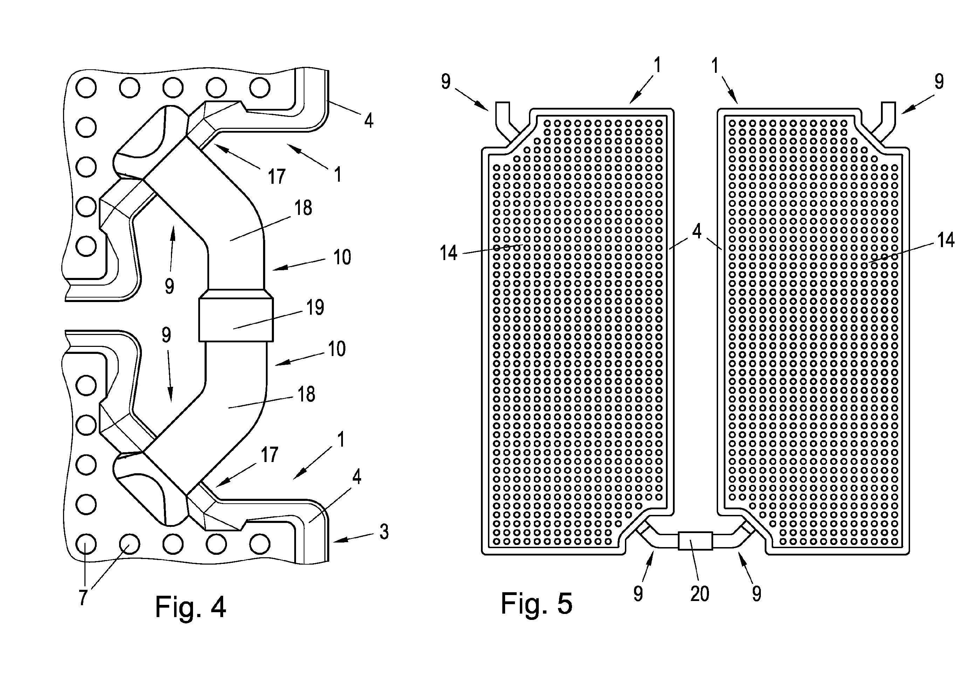

Fig. 4 stellt in einer Detailansicht zwei miteinander verbundene Temperierungsmittelanschlüsse 9 zweier benachbarter Klimamodule 1 in einer Draufsicht dar. Die beiden Temperierungsmittelanschlüsse 9 sind jeweils an Eckabschnitten 17 der Klimamodule 1 an deren Schmalseiten 3 bzw. an deren Seitenkanten 4 befestigt. Die Zwischenrohrabschnitte 18 der beiden Temperierungsmittelanschlüsse 9 sind dazu mit einer Verbindungsmuffe 19 miteinander verbunden.

Fig. 5 zeigt in einer Draufsicht zwei benachbarte Klimamodule 1, wobei eine Verbindungsleitung 20 jeweils einen ersten Temperierungsmittelanschluss 9 jedes Klimamoduls 1 miteinander verbindet. Jedes Klimamodul 1 weist jeweils einen zusätzlichen weiteren Temperierungsmittelanschluss 9 zum Verbinden mit nicht dargestellten benachbarten Klimamoduln oder mit einer Verbindungsleitung eines Temperierungsmittelkreislaufs auf.

### Liste der Positionsnummern:

- 1: Klimamodul
- 2: Klimatisierungselement
- 3: Schmalseite des Klimatisierungselements
- 4: Seitenkante des Klimatisierungselements
- 5: Bauhöhe des Klimatisierungselements
- 6: Innenraum des Klimatisierungselements
- 7: Noppenstruktur
- 8: Symmetrieebene der Seitenkanten
- 9: Temperierungsmittelanschluss
- 10: elliptischer Anschlussquerschnitt
- 11: Hauptachse des Anschlussquerschnitts
- 12: Nebenachse des Anschlussquerschnitts
- 13: Wandstärke des Temperierungsanschlusses
- 14: Außenseite des Klimatisierungselements
- 15: Dämmmaterial
- 16: Durchmesser eines kreisförmigen Anschlussrohres
- 17: Eckabschnitt des Klimatisierungselements
- 18: Zwischenrohrabschnitt mit elliptischem Anschlussquerschnitt
- 19: Verbindungsmuffe
- 20: Verbindungsleitung
- 21: weitere Außenseite des Klimatisierungselement

## Patentansprüche

1. Klimamodul (1) zum Einbau in einem Fußboden, umfassend ein flaches Klimatisierungselement (2), welches an seinen Schmalseiten (3) oder an Eckabschnitten (17) seiner Schmalseiten (2) mit zumindest zwei Temperierungsmittelanschlüssen (9) versehen sowie in seinem Innenraum (6) von einem Temperierungsmittel vollflächig durchströmbar ist, wobei zur Aufnahme hoher Lasten der Innenraum (6) des Klimatisierungselements (2) mit einer Noppenstruktur (7) versehen ist, **dadurch gekennzeichnet, dass** die Temperierungsmittelanschlüsse (9) einen Anschlussquerschnitt (10) mit einer Hauptachse (11) sowie einer im Vergleich zur Hauptachse (11) kürzeren Nebenachse (12) aufweisen, wobei die Hauptachse (11) im Wesentlichen in Längsrichtung der Seitenkante (4) angeordnet ist und die Nebenachse (12) im Wesentlichen normal auf die Seitenkante (4) steht.

2. Klimamodul (1) nach Anspruch 1, **dadurch gekennzeichnet, dass** die Temperierungsmittelanschlüsse (9) einen elliptischen, ovalen oder polygonalen Anschlussquerschnitt (10) aufweisen.

3. Klimamodul (1) nach Anspruch 1 oder 2, **dadurch gekennzeichnet, dass** eine Nebenachsenlänge (12) des Anschlussquerschnitts (10) höchstens eine doppelte Bauhöhe (5) des Klimatisierungselements (2) beträgt.

4. Klimamodul (1) nach Anspruch 3, **dadurch gekennzeichnet, dass** eine Nebenachsenlänge (12) des Anschlussquerschnitts (10) höchstens die einfache Bauhöhe (5) des Klimatisierungselements (2) beträgt.

5. Klimamodul (1) nach einem der Ansprüche 1 bis 4, **dadurch gekennzeichnet, dass** jeder Temperierungsmittelanschluss (9) mit einem Zwischenrohrabschnitt (18) mit elliptischem Anschlussquerschnitt (10) versehen ist.

6. Klimamodul (1) nach einem der Ansprüche 1 bis 5, **dadurch gekennzeichnet, dass** jeder Temperierungsmittelanschluss (9) mit einer Verbindungsleitung (20) oder einem benachbarten Temperierungsmittelanschluss (9) oder einem Zwischenrohrabschnitt (18) durch Aufstecken, Verschrauben, Verkleben oder Verschweißen verbindbar ist.

7. Klimamodul (1) nach einem der Ansprüche 1 bis 6, **dadurch gekennzeichnet, dass** das Klimatisierungselement (2) und/oder die Temperierungsmittelanschlüsse (9) aus einem Kunststoff gefertigt ist/sind.

8. Klimamodul (1) nach einem der Ansprüche 1 bis 7, **dadurch gekennzeichnet, dass** an einer Außenseite (21) des Klimatisierungselements (2) eine flächige Beplankung befestigbar ist.

9. Klimamodul (1) nach einem der Ansprüche 1 bis 8, **dadurch gekennzeichnet, dass** an einer Außenseite (14) des Klimatisierungselements (2) ein Dämmmaterial (15) befestigbar ist.
